# EUROPEAN PATENT SPECIFICATION

(11) **EP 2 137 004 B1**
(45) Date of publication and mention of the grant of the patent: **17.08.2011**
(21) Application number: 08736201.8
(22) Date of filing: 14.04.2008
(51) Int. Cl.: B60C 17/06, B60C 19/00

(54) **INSERT FOR MOUNTING INTO AN INFLATABLE TIRE**
EINSATZ ZUR BEFESTIGUNG IN EINEM AUFBLASBAREN REIFEN
ELÉMENT D'INSERTION S'INSTALLANT DANS UN PNEU GONFLABLE

(30) Priority: 13.04.2007 EP 07106174
(43) Date of publication of application: 30.12.2009
(73) Proprietor: SOLIDEAL HOLDING SA, 2086 Luxemburg (LU)
(72) Inventor: PRINGIERS, Koenraad, Colombo 5 (LK)
(74) Representative: Luys, Marie-José A.H.
(86) International application number: PCT/EP2008/054503
(87) International publication number: WO 2008/125661

(56) References cited:
- EP-A- 0 314 988
- EP-A- 0 359 388
- EP-A- 1 559 590
- EP-A- 1 852 278
- WO-A-02/14088
- US-A- 5 836 366

## Description

The present invention relates to an inflatable tire as described in the preamble of the first claim.

The present invention also relates to an insert as part of an inflatable tire.

US2004/0154718 discloses an inflatable tire comprising an inflatable cavity delimited by a annularly shaped tire body in the form of a circumferential tread portion comprising a running face and two sidewalls extending from opposing sides along the circumference of the tread portion in a direction towards the rotational axis of the tire. The tire is mounted to a rim and the cavity of the tire, defining an inflatable volume, is filled with a filling material, in particular, a polyurethane composition after which the polyurethane is cured. The cured polyurethane is used in applications where high safety standards have to be met and a tire running flat is unacceptable, for example when the tires support a scaffold. The inflatable tire disclosed in US2004/0154718 however has the disadvantage that in order to be fully inflated, the cavity of the inflatable tire has to be completely filled with the filling material for example polyurethane. In case polyurethane is used for filling the tire, the amount of polyurethane ads to the cost of filling the tire since polyurethane has a considerable price.

WO0214088 discloses that in order to avoid explosive decompression of an inflated tire when the tire is punctured, the tire is filled with a foamed elastomer filling. WO0214088 further describes that used foamed elastomer filling of tires can be cut up in chunks which are then placed into the casing of the tire after which unused elastomer filling is added as a filler material to fill any remaining voids to reduce the inflatable volume. The inflatable tire resulting from the method disclosed in WO0214088, although reducing the amount of filling material however has the disadvantage that it is difficult to correctly inflate the tire since the chunks can not be correctly located inside the casing of the tire. Moreover it is possible that their location shifts when inflating the tire or when the tire is placed on a rim.

There is thus a need for a tire which requires a reduced amount of filling material and allows a more easy correct inflating of the tire.

Accordingly it is the object of the invention to provide an inflatable tire in which the amount of material needed to fill the tire may be reduced while allowing the tire to be inflated more easily.

This is achieved according to the present invention with a tire showing the technical features of the characterising portion of the first claim.

Thereto, the assembly of the insert and the annularly shaped tire body comprises positioning means which permit positioning and at least temporarily fixing the position of the insert into the annular space of the tire.

In the context of this application, with condensed matter filling material is meant, every material that can be used to fill a tire and that is in a condensed state, i.e. solid or liquid, when the tire is in use so that the risk of a sudden leave of filling material from the tire is minimal and maximum safety of the tire is guaranteed. Preferred filling materials are liquid upon filling of the tire, but are solid during use of the tire. Possible filling materials include any flexible polymer such as for example polyurethane, flexible plastic foam or flexible rubber foam, etc. The filling material can be mixed with a second material such as rubber granulate, polyurethane granulate, sawdust, CaCO₃, soft mineral material, etc. The second material preferably has a hardness which does not differ too much from the hardness of the filling material and/or has a very fine structure such as for example a powder.

Due to the presence of the insert in the inflatable volume of the tire, the inflatable volume and thus the amount of filling material needed to fully inflate the tire are reduced by the volume of the insert. This is particularly important when polyurethane is used as filling material, as it is rather expensive.

The inflatable tire of this invention presents the advantage that the material of the insert, the filling material and the tire can be chosen independently of each other. This permits selecting the material for each of these individual parts in function of the envisaged properties of the tire such as the physical characteristics to be provided by the inflated tire, for example support to be provided by the tire, elasticity, load bearing capacities and deformation of the tire during use, desired characteristics of the tire in relation to stability of the vehicle to be supported by the tires in various circumstances of use (lower and higher velocities, grip, road-holding, etc), etc.

The presence of the positioning means facilitates positioning of the insert in the inner annular space of the tire in an envisaged position and maintaining the insert at least temporarily in that position. The presence of the positioning means allows achieving a more correct positioning of the insert into the annular space and maintaining the position of the insert in the inner annular space while filling material is injected and, if necessary depending on the characteristics of the filling material, during curing of the filling material.

The positioning means are preferably designed such that they maintain the insert at a predetermined distance from the inner face of the tire. This way the contact area between the insert and the inner face of the inflated tire is minimised, and the operational reliability of the tire is improved since friction between tire and insert is minimised.

In a preferred embodiment, the positioning means comprises a protrusion extending from an outer face of the insert facing an inner face of the annularly shaped tire body towards the annularly shaped tire body, the protrusion being provided to contact the inner face of the annularly shaped tire body of the uninflated tire. Although the protrusion contacts the inner face of the uninflated tire annular space, the contact surface area is negligible as compared to the surface area of the insert.

In a further preferred embodiment the positioning means comprises a plurality of protrusions.

The inventor has found that such an insert can be positioned into the annular space even more precisely.

In a further preferred embodiment, the protrusion comprises an extension having a smaller width as compared to the protrusion at his end part facing the inner face of the annularly shaped tire body, the extension to minimise the contact surface area between the protrusion and the inner face of the annularly shaped tire body of the uninflated tire. This way friction between insert and the inflated tire is minimised. The smaller width of the extension also allows some compression of the extension which facilitates mounting of the insert into the annular space of the uninflated tire and assists in more or less clamping the insert into the annular space and achieving a better and more accurate positioning of the insert into the annular space of the uninflated tire. The remaining wider part of the protrusion offers a reliable base for the extension, as a base for a precise positioning of the insert into the annular space of the uninflated tire. The extension can be made of a material with the same compressibility as the remainder of the protrusion. Preferably however, the extension is made of a material with a higher compressibility and the remainder of the protrusion is made of a material that is less compressible, without going at the expense of easy mounting and reliable positioning of the insert.

The inventor has found that the insert preferably is annularly shaped to provide optimum fit and easy mounting of the insert into the annular space of the inflatable tire. The annular shape of the insert also provides the inflatable tire with more homogeneous physical characteristics. Any load originating from a load carried by the vehicle resting on the tires as well as any load caused by the filling material is transferred to the insert. With an annularly shaped insert a homogeneous distribution of the load over the insert is obtained decreasing the wear and tear of the tire and the insert, thereby improving the operational reliability and the lifespan of the insert and the tire.

The insert preferably comprises any one of the following materials: deformable, solid and/or foamed plastic material, elastomer, rubber, polypropylene, EPDM rubber, polyethylene. In addition thereto at least one additive such as for example rubber granulate, polyurethane granulate, sawdust, CaCO₃, soft mineral material, etc can be mixed with the above mentioned materials. The additive preferably has a hardness which does not differ too much from the hardness of the remainder of the material of which the insert is made and/or has a small particle size and is for example a powder. The hardness of the insert preferably does not differ too much from the hardness of the filling material. The insert however can be made of any material known to the person skilled in the art which provides the tire in which the insert is mounted with the desired physical characteristics. The insert therefore no longer depends of the availability of chunks of used elastomer filling, since the mentioned materials are readily commercially available.

The presence of an insert with a rounded outer face reduces the risk to building of stress and concentrations of stress at edges and/or corners reducing the risk to tearing. The rounded face of the insert also provides the homogeneity of the physical characteristics of the tire.

Other details and advantages of the device according to the invention will become apparent from the enclosed figures and description of preferred embodiments of the invention.
Figure 1a shows an overview of an insert according to the invention.
Figure 1b shows an overview of a different embodiment of the insert according to the invention.
Figure 1c shows an overview of another different embodiment of the insert according to the invention.
Figure 1d shows an overview of another different embodiment of the insert according to the invention.
Figure 1e shows an overview of another different embodiment of the insert according to the invention.
Figure 1f shows an overview of another different embodiment of the insert according to the invention.
Figure 1g shows an overview of another different embodiment of the insert according to the invention.
Figure 1h shows an overview of another different embodiment of the insert according to the invention.
Figure 2a shows a top view of the insert of figure 1.
Figure 2b shows a cross-section of a side view of the insert of figure 1.
Figure 3 shows a cross-section of a tire comprising the insert of figure 1.
Figure 4 shows a cross-section of a tire comprising a different embodiment of the insert of figure 1.
Figure 5 shows the cross-section of the tire of figure 4 without the insert.
Figure 6 shows the cross-section of the insert of figure 4 without the tire.

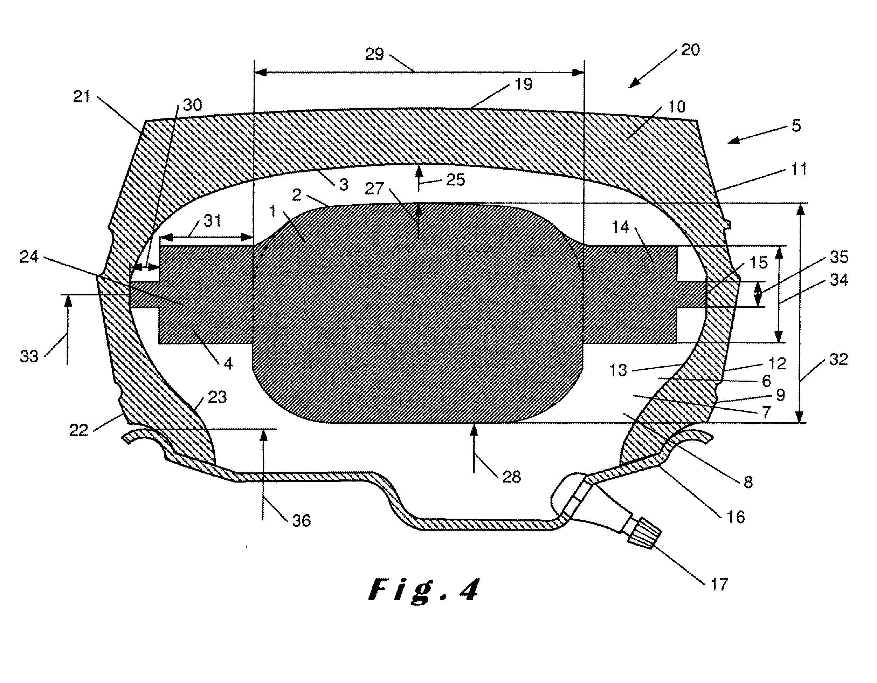

A preferred embodiment of the inflatable tire 5 shown in figure 4 comprises a annularly shaped tire body along a circumference of the tire 5 comprising a tread portion 10 forming a running face 19 for the tire 5 along the circumference 20 of the tire 5. The annularly shaped tire body of the tire 5 preferably also comprises a carcass 9 supporting the tread portion 10. The tread portion 10 and the carcass 9 are however not critical and any other annularly shaped tire body known to the person skilled in the art is possible.

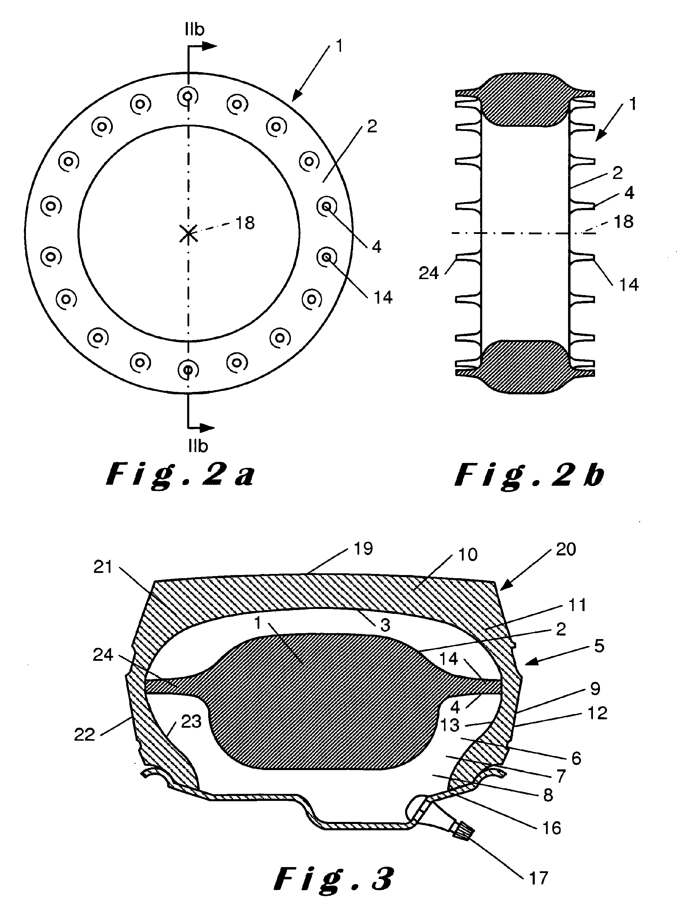

The annularly shaped tire body extends around a central rotational axis 18 of the tire 5 along the circumference of the tire 5. The carcass 9 preferably comprises a first circumferential sidewall 12 which extends from a first side 11 of the tread portion 10 towards the rotational axis 18 of the tire 5 and a second circumferential sidewall 22 extending away from a second side 21 of the tread portion 10 towards the rotational axis 18 of the tire 5. The first 11 and the second 21 side extend along opposing circumferential sides of the tread portion 10. The annularly shaped tire body, in particular its inner face 3, 13, 23, more in particular the inner face 3 of the tread portion 10, the inner face 13 of the first side wall 12 and the inner face 23 of the second side wall 22, at least partially delimits an annular space 6 of the tire 5 surrounding the rotational axis 18 and comprises an inflatable volume 7 for receiving a filling material 8. The annular space 6 is further delimited when the tire 5 is mounted to a rim 16 by the outer circumferential side of the rim 16. The first 12 and the second 22 circumferential sidewall are preferably provided with respectively a first 38 and a second 39 base portion provided to contact the rim 16 to mount the tire 5 to the rim 16, as shown in figures 3 and 4. The first and second base portions 38, 39 can for example comprise a bead, as is well known for the person skilled in the art.

Within the scope of the invention it is preferred to minimise the contact surface area between the insert 1 and the inner face 3, 13, 23 of the annularly shaped tire body of the tire 5 to minimise friction between the insert 1 and the tire 5. By reducing the friction, the wear and tear working on the insert 1 and the tire 5 can be reduced, which improves operational reliability and lifespan of the insert 1 and the tire 5.

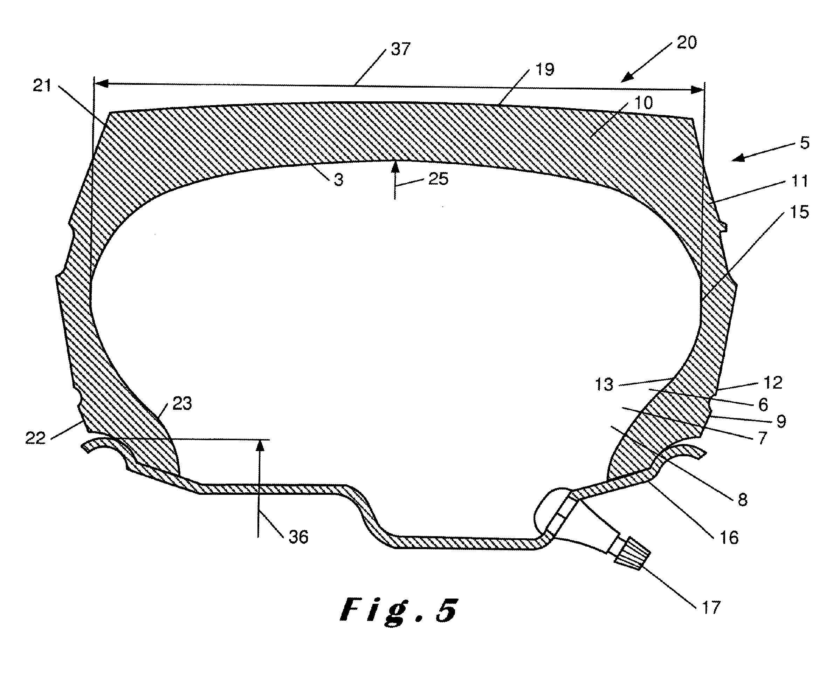

The dimensions, form and/or shape of the insert 1 preferably are adapted to the dimensions, form and/or shape of the annular space 6 of the tire 5 in the case, as shown in figures 3 - 6, defined by the inner face 3 of the tread portion 10, the inner face 13 of the first sidewall 12 and the inner face 23 of the second side wall 22 and, since a rim 16 is mounted to the tire 5 which then further delimits the annular space 6, by the outer circumferential side of the rim 16. The dimensions, form and/or shape of the insert 1 may even be adapted to the dimensions, form and/or shape of the annular space 6 of the uninflated tire 5. When filling the annular space, an outward force is exerted by the filling material, pushing the inner face of the annularly shaped tire body 3, 13, 23 outwardly of the tire. Thereby, the contact between the insert 1 and the tire 5 will usually disappear and friction between insert 1 and tire 5 is eliminated. The volume of the inflatable volume 7 is preferably reduced as much as possible by making the insert 1 as large as possible. Table 1 shows, by way of example, some parameters characterising the annular space 6 of the tire 5 in relation to parameters characterising the dimensions, form and/or shape of the insert 1.

The insert 1 may be made of any composition comprising any one of the following materials: rubber, plastic, elastomer, elastic and/or deformable material but preferably comprises any one of the following: deformable, solid and/or foamed plastic material, rubber, polypropylene, EPDM rubber, polyethylene, elastomer. In addition thereto one or more additives comprising rubber granulate, polyurethane granulate, sawdust, CaCO₃, soft mineral material, ,etc. can be mixed with the above mentioned materials in the composition of the insert 1. The additive preferably has a hardness which does not differ too much from the hardness of the material of which the remainder of the insert 1 is made and/or has a fine particle size such as for example a powder. The composition of the insert 1 preferably has a hardness which does not differ to much from the hardness of the filling material 8.

The insert 1 according to the invention is mounted into the tire 5 into the annular space 6 with the purpose of decreasing the inflatable volume 7. In a preferred embodiment of the invention the insert 1 is dimensioned so that the volume of the annular space 6 is reduced with 20 - 80 %, more preferably 30 - 70 % most preferably 40 - 60 %, as indicated in table 1.

The assembly of the insert 1 and the annularly shaped tire body is provided with positioning means 4. The positioning means 4 may either be provided on the insert 1, the inner face of the annularly shaped tire body of the tire 5 or cooperating positioning means 4 may be provided on both of them. Preferably the positioning means 4 are provided on the insert 1 with the aim of permitting a precise positioning of the insert 1 in a predetermined position in the annular space 6 and at least temporarily maintaining that position of the insert 1. The positioning means 4 counteract shifting of the insert 1 in the annular space 6 when filling the inflatable volume 7 with filling material 8. The positioning means 4 can for example also be provided on the inner face 3, 13, 23 of the annularly shaped tire body facing the insert 1, or may be present on both the insert 1 and the inner faces 3, 13, 23 of the annular space 6. The positioning means 4 can be permanently provided on the insert 1 or the inner faces 3, 13, 23 of its annular space 6 or can for example be removably mounted thereto and be removed after having inflated the tire 5. The positioning means 4 can be made of any material considered suitable by the person skilled in the art. The positioning means 4 may for example take the shape of means for fastening the insert 1 into the annular space 6 of the tire 5 which are made of metal, plastic, wooden or rubber and which extend from one ore more of the inner faces 3, 13, 23 of the annularly shaped tire body towards the insert 1. The positioning means 4 may for example be metal elements which extend from at least one inner face 3, 13, 23 towards the insert 1. The metal elements may for example be pierced through or into the material of tire 5 and into the insert 1 before the tire is inflated with filling material 8. The metal elements can for example be removed after the tire 5 is filled with filling material 8.

In a preferred embodiment of the invention the positioning means 4 comprise a protrusion 14, 24 which extends from an outer face 2 of the insert 1 towards the inner face 3, 13, 23 of the annularly shaped tire body. The dimensions of the protrusion 14, 24 is chosen such that an end part of the protrusion 14, 24 contacts the inner face 3, 13, 23 of the annularly shaped tire body of the uninflated tire 5 with the purpose of clamping the insert 1 into the annular space 6 in a desired position and maintaining that position. The use of a protrusion minimises the contact area between the insert 1 and the inner face 3, 13, 23 of the uninflated tire 5. Moreover the filling material 8 can more freely flow through the space of the annular space 6 left open by the insert 1. This allows the tire 5 to be more easily filled with the filling material 8. Although the protrusion 14, 24 may be removably mounted, they may be made in one piece with the tire 5, but preferably they are permanently attached to or made in one piece with the remainder of the insert 1. In the latter case the protrusion 14, 24 may be provided to the insert 1 in any way known to the person skilled in the art such as gluing, stapling, nailing, screwing, etc. As the protrusion 14, 24 is preferably made in one piece with the rest of the insert 1, the protrusion 14, 24 and the remainder of the insert 1 is preferably made of the same material. The nature of the material of the protrusion 14, 24 is however not critical for the invention and may be determined by the person skilled in the art. The protrusion 14, 24 may take any suitable shape and may for example be spherical, ellipsoid, rectangular, pyramidal, conic, cylindrical, hair-like, etc. The shape and form of the protrusion 14, 24 can be chosen by the person skilled in the art keeping in mind that the contact between the protrusion 14, 24 and the inner face 3, 13, 23 of the annular space 6 is preferably kept to a minimum.

The protrusion preferably comprises a base which is connected to the insert 1 and an end part which contacts the inner face 3, 13, 23 of the annular space 6. The end part preferably is elastic with the purpose of clamping the insert 1 into the annular space 6. To achieve this, the protrusion and the end part may be made of different materials:

Although the protrusion 14, 24 can be reinforced by adapting its geometrical cross-section such as for example by increasing the width 34 of the protrusion, part of the protrusion 14, 24, or all, can comprise a reinforcing member extending in height direction of the protrusion 14, 24 rendering the protrusion 14, 24 more rigid and more resistant to compression in height direction of the protrusion 14, 24. The reinforcing member preferably is at least partially embedded in the protrusion 14, 24 and preferably is made of rigid plastic or metal.

The protrusion 14, 24 preferably comprises an extension 15 at an end part of the protrusion 14, 24 which contacts the inner face 3, 13, 23 of the annular space 6. The dimensions of the cross-section of the extension 15 preferably are smaller than the dimensions of the cross-section of the protrusion 14, 24 to minimise the contact surface area between the protrusion 14, 24 and the inner face 3, 13, 23 of the annular space 6 and decreases the wear and tear of the insert 1 and the tire 5 while providing the insert 1 with a self-supporting positioning into the annular space 6. The extensions 15 preferably are cylindrical having a width 35 and a height 30 but can have any other form and/or shape deemed appropriate by the person skilled in the art such as tapered towards an end part of the protrusion 14, 24 and/or cubic, ellipsoid, spherical, rectangular, etc.

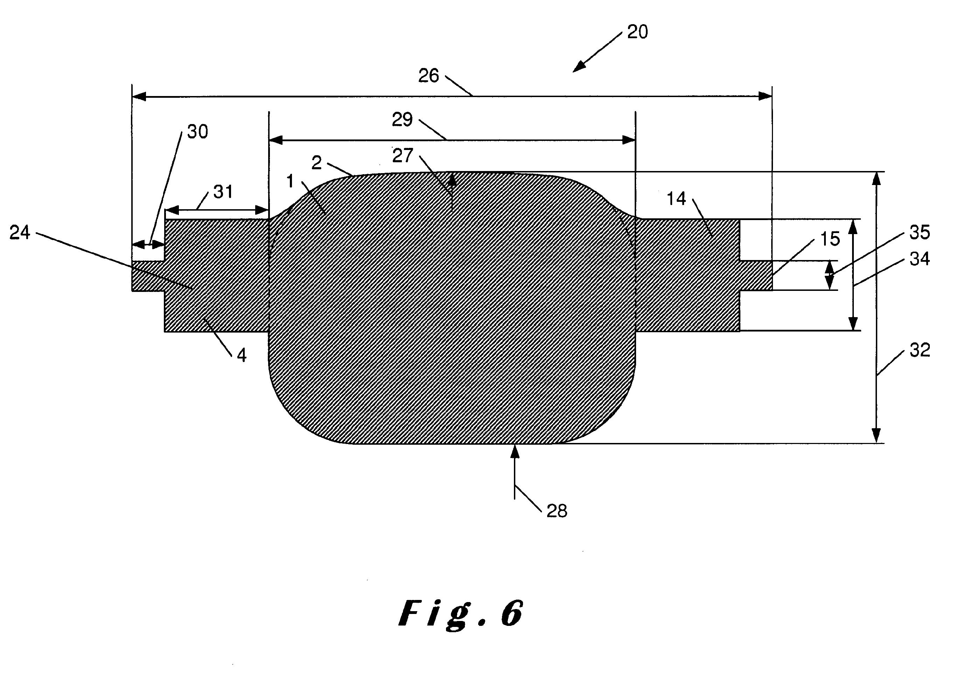

An example of such an extension 15 is shown in figure 4 and 6. This extension 15 preferably is cylindrical and has a diameter which is smaller than the diameter of the protrusion 14. The extension 15 has a centre which is positioned substantially at the centre of the protrusion 14. Such an embodiment is however not critical for the invention and other embodiments of the extension 15 are possible.

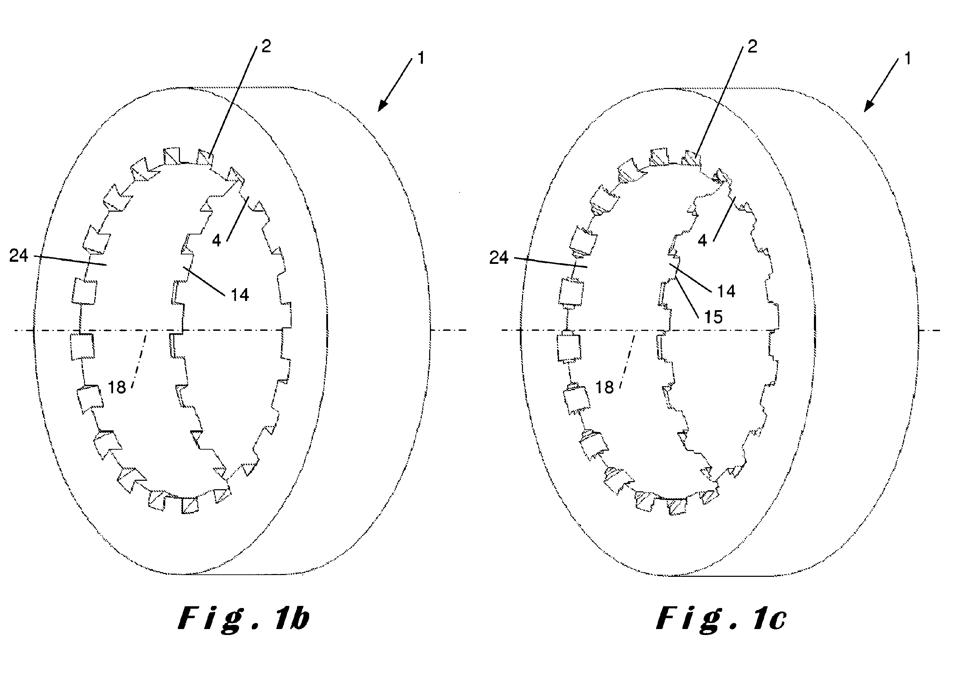

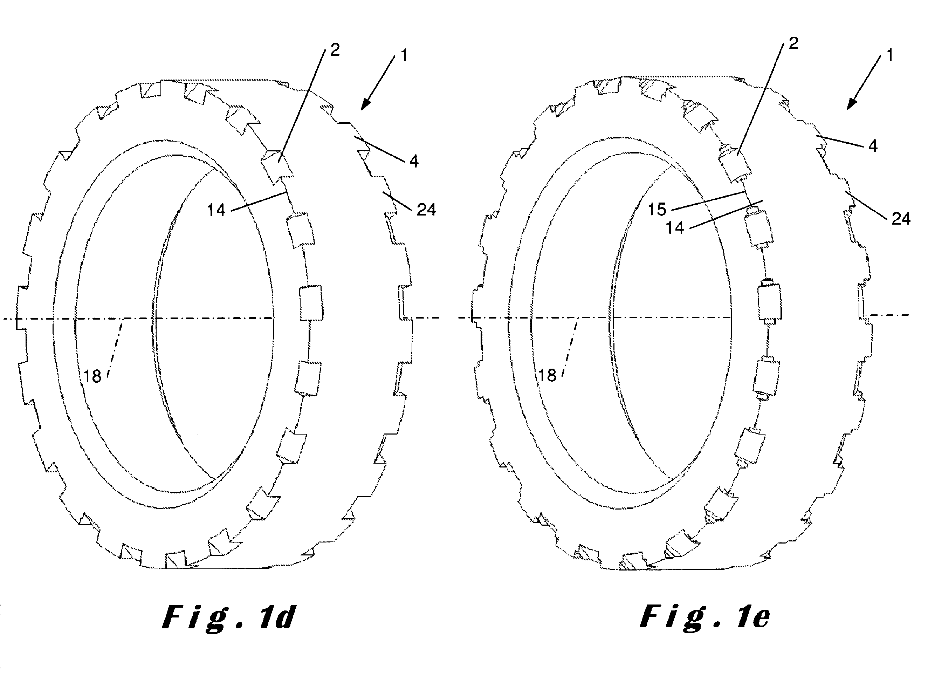

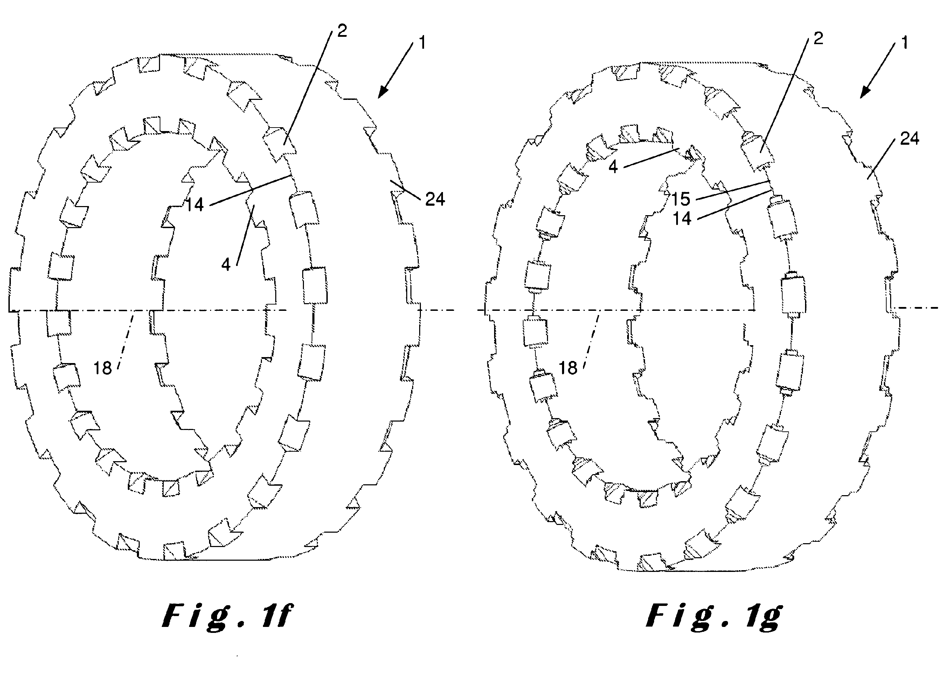

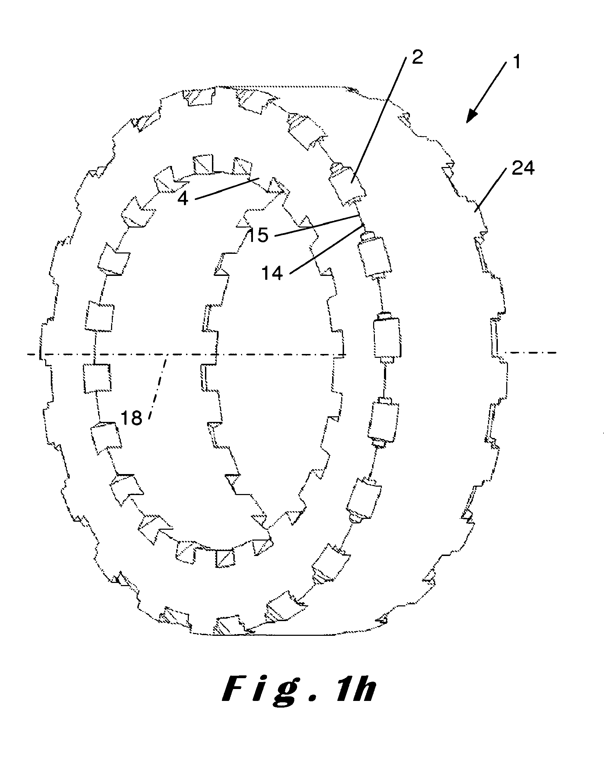

A different embodiment of the extension is for example shown in figures 1c, 1e, 1g and 1h. The extensions 15 shown in these figures have a triangular cross-section and are substantially positioned in the centre of the protrusions 14. The extension 15 substantially extends along the full width of the protrusion 14 but only along part of the length of the protrusion 14. This is however not critical for the invention and the extension 15 could also extend along only part of the width or just along part of the width. It is also not necessary for the extension to be substantially located at the centre of the protrusion 14.

The extension 15 preferably is compressible in height direction of the protrusion 14, 24 so that the extension 15 may be compressed when the insert 1 is positioned in the annular space 6. The compression of the extension 15 results in a clamping of the insert 1 into the annular space 6 and in a more precise and stable positioning maintaining a minimum contact between the insert 1 and the inner face 3, 13, 23 of the tire 5.

The protrusion 14, 24 preferably extends virtually perpendicular with respect to the outer face 2 of the insert 1 as this permits an optimum positioning of the insert 1 into the annular space 6. The angle under which the protrusions extend from the outer face 2 of the insert is however not critical for the invention and can for example vary from 0° - 90°, preferably from 45° - 90°. The protrusion 14, 24 preferably contacts the inner face 3, 13, 23 of the tire substantially perpendicular as this provides optimum suspension of the insert 1 into the annular space 6 while minimising the contact area between the protrusion 14, 24 and the inner face 3, 13, 23 of the annularly shaped tire body.

Preferably the positioning means 4 comprise a plurality of protrusions 14, 24. The number of protrusions 14, 24 is not critical for the invention and can be determined by the person skilled in the art.

Not all the protrusions 14, 24 of the insert 1 need to be the same and can be different. The shape, dimensions, location, orientation, etc. can be different for all the different protrusions 14, 24. It is also not necessary to provide all of the protrusions 14, 24 with an extension 15, as shown in figure 1h. The protrusions 14, 24 preferably are all positioned on the same distance 33 from the rotational axis 18 of the tire 5 but this is not critical for the invention and the position of the protrusions 14, 24 can for example periodically change depending on the desired characteristics of the insert 1. The dimensions of the protrusions 14, 24, such as width 34 and height 31, depend mainly on the dimensions of the annular space 6, the dimensions of the insert 1, the shape of the insert 1, the shape of the tire 5, etc. Some examples of total widths 26, being the shortest distance between end parts of the protrusions 14, 24, for example comprising the heights 30, 31 of the extensions 15 and the protrusions 14, 24 and the side width 29 of the insert 1, in relation to the inside section width 37, being the shortest distance between the locations at which the protrusions 14, 24 contact the inner surface of the annular space 6, of the uninflated tire 5 are shown in table 1.

To achieve homogeneous support of the insert 1, the protrusions 14, 24 preferably are regularly distributed over the surface of the insert 1 or the inner face 3, 13, 23 of the tire 5. The protrusions 14, 24 preferably are regularly distributed in circumferential and/or cross sectional direction of the outer face 2 of the insert 1 to provide uniform support of the insert and maintaining the envisaged position in the annular space 6. Along the cross-section for example one, two, three, four, five, six, seven, eight, nine, ten, etc. protrusions 14, 24 may be provided. The protrusions 14 extending towards the inner face 13 of the first sidewall 12 and the position of the protrusions 24 extending towards the inner face 23 of the second sidewall 22 are preferably positioned symmetrical with respect to each other, they may be alternating individually and/or in one or more rows over the surface at regular intervals or not, positioned staggered, etc.

The protrusions 14, 24 preferably extend from the insert 1 towards and contact the inner face 13, 23 of the first 12 and the second 22 circumferential sidewalls. This is however not critical for the invention and the protrusions may extend towards any other part of the inner face of the tire 5 such as for example the inner face 3 of the tread portion 10 or for example the outer face 2 of the rim 16.

According to a first preferred embodiment of the insert 1 according to the invention, the protrusions 14, 24 are provided to extend from the insert 1 towards and contact respectively the first and the second base portion 38, 39. Such protrusions are for example shown in figure 1b, 1c, 1f, 1g and 1h. It is preferred that the protrusions 14, 24 have a length measured along the circumference 20 of the tire 5 which is longer than the height 31 of the protrusions 14, 24. More preferably, these protrusions 14, 24 have a width 34 which is substantially equal to and preferably longer than the height 31 of the protrusions 14, 24. This dimensions are however not critical for the invention and can be chosen by the person skilled in the art.

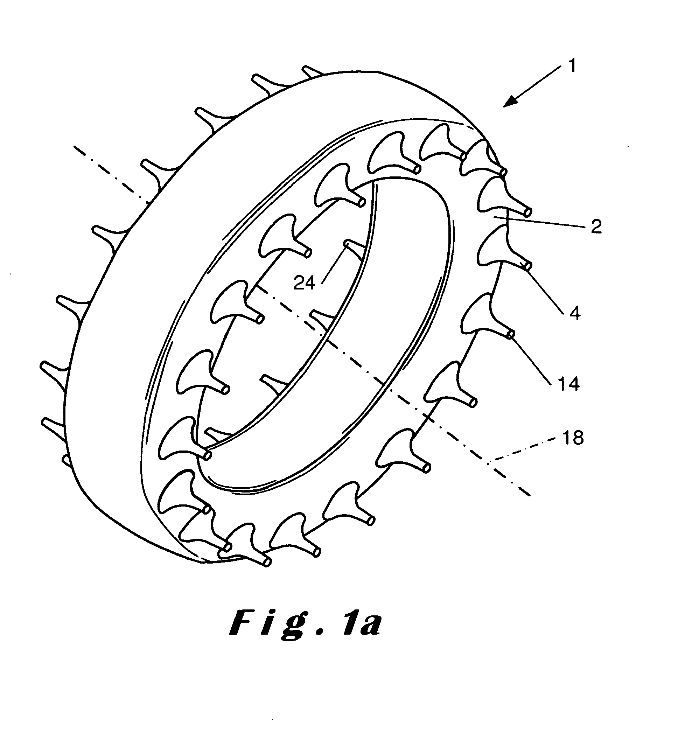

According to a second preferred embodiment of the insert 1 according to the invention, the protrusions 14, 24 are provided to extend from the insert towards and contact a region of the inner face 13, 23 of the side walls 12, 22 positioned between the base portion 38, 39 and the inner face 3 of the tread portion 10 as for example shown in figure 1a and figures 3, 4 and 6.

Another to a third preferred embodiment of the insert 1 according to the invention, the protrusions 14, 24 are provided to extend from the insert towards and contact a region of the inner face 3, 13, 23 of the first and/or side wall 12, 22 near the tread portion 10 or a region of the inner face 3, 13, 23 of the tread portion 10 near the side wall 12, 22. Such protrusions are for example shown in figure 1d, 1e, 1f, 1g and 1h. It is preferred that the protrusions 14, 24 have a length measured along the circumference 20 of the tire 5 which is longer than the height 31 of the protrusions 14, 24. More preferably, these protrusions 14, 24 have a width 34 which is substantially equal to and preferably longer than the height 31 of the protrusions 14, 24. This dimensions are however not critical for the invention and can be chosen by the person skilled in the art.

The insert 1 preferably is annularly shaped and made of one piece and extends along the entire circumference of the inner face 3 of the tread portion 10 of the annularly shaped tire body. The annularly shaped insert 1 improves the homogeneity of the composition of the inner volume of the tire 5 and thus improves the homogeneity of the physical characteristics provided by the tire 5. Although the circular shape of the insert 1 is preferred, the insert 1 can have any other shape and form deemed appropriate by the person skilled in the art such as square, rectangular, ellipsoid, triangular, undulating, curly, angled, etc. The insert 1 can however also be formed of a longitudinally shaped member with two end parts in longitudinal direction of the member, which is bent into the annular space 6 of the tire 5 in such a way that the two end parts contact each other. Thereby the end parts preferably have a complementary, engaging surface to permit forming an annular insert 1. The insert 1 may however also be made of several adjacent parts. The insert 1 can for example comprise blocks which extend along a third, quart, fifth, sixth, seventh, eight, etc. of the circumference of the inner face 3 of the tread portion 10. Also in this case the adjacent end parts preferably have complementary engaging surfaces and can for example be provided with means for temporarily or permanently fastening the two end parts to each other. The use of a continuous annular insert 1 has the advantage that the load working on the insert 1 is more homogeneously divided over the insert 1, whereas the insert 1 made of the bent member or the insert 1 comprising several parts can be more easily positioned into the annular space 6 of the tire 5.

Although it is preferred that the insert 1 extends along the entire circumference of the inner faces 3, 13, 23 of the tire 5, the insert 1 can also extend along part of the circumference of the inner face 3 of the tread portion 10 of the tire 5.

The shape and/or dimensions of the cross-section of the insert 1 preferably remain constant along the circumference of the insert 1. The cross-section of the insert 1, of which an example is shown in figure 2, can have any shape deemed appropriate by the person skilled in the art such as square, ellipsoid, circular, rectangular, triangular, kite-shaped or any other polygon deemed appropriate by the person skilled in the art. The cross-section of the insert 1 may for example be rectangular or square with rounded corners and a side width 29 and a height 32 as shown in figure 4. The insert 1 preferably is rotational symmetrical with respect to the rotational axis 18 of the insert 1.

The outer surface of the insert 1 preferably is flat and/or smooth but can have any form and/or shape deemed appropriate by the person skilled in the art such as for example oscillating, ribbed, continuously curved, discontinuously oscillating, step-wise, etc.

Table 1 shows some preferred relations between the inner diameter 28 of the insert 1 and the outer diameter 36 of the rim 16 and between the outer diameter 27 of the insert 1 and the diameter 25 of the inner face 3 of the tread portion 10.

The following table shows the preferred parameters of the insert 1 in relation to the parameters of the tire 5.

**Table 1**

| | Preferred | More preferred | Most preferred |
|---|---|---|---|
| Outer diameter 27 insert 1 / diameter 25 of the inner face 3 of the uninflated tire 5 | 80%-103% | 95%-103% | 100.8% |
| Volume insert 1 / inflatable volume 7 | 20%-80% | 30%-70% | 40%-60% |
| Inner diameter 28 insert 1 / outside diameter 36 of rim 16 | 95%-150% | 100%-120% | 100% |
| Total width 26 insert 1 / inside section width 37 uninflated tire 5 | 90%-110% | 96%-104% | 100% |

The insert 1 can be mounted into the annular space 6 of the tire 5 in any way known to the person skilled in the art. When the insert 1 is for example made of several individual pieces, the different pieces of the insert 1 can be mounted into the annular space 6 by putting them at their desired individual locations, assisted by the positioning means 4, before the rim 16 is installed to the tire 5. When the insert 1 is made in one piece, the insert 1 is mounted into annular space 6 assisted by the positioning means 4 after which, preferably, the rim 16 is mounted to the tire 5.

Mounting of the annular shaped insert 1 into the tire 5 can be done by pushing together two sides of the annular insert 1, temporarily creating an oblong shaped insert 1 which can be mounted into the annular space 6. The oblong shape of the insert 1 can be created by pulling the insert 1 through a tube along a diametrical direction. The tube preferably has a diameter which is comparable to, preferably smaller than, the outer diameter of the rim 16. The tube is strong enough to withstand the forces exerted by the two diametrically pushed together sides of the annular insert 1, creating the temporarily oblongly formed insert 1. After the insert 1 has been mounted into the annular space 6 of the tire 5, the rim 16 is mounted to the tire 5 and the annular space 6 is filled with filling material 8, for example through the valve 17. The filling of the annular space 6 with filling material 8 can be done as deemed appropriate by the person skilled in the art and is not critical for the invention. US2004/0154718 for example discloses a method for filling a tire 5 with filling material 8, however other methods known to the person skilled in the art are possible.

Preferably use is made of a filling material which may be injected in the liquid state and which is hardened or cured later on. After the tire 5 has been filled with filling material 8, the filling material 8 possibly has to cure, for example when polyurethane is used. The tire 5 can be positioned in any position deemed appropriate by the person skilled in the art, but preferably is positioned with its rotational axis directed upwards. This is particularly appropriate in case the protrusions 14, 24 extend towards the first 12 and/or second 22 circumferential side wall of the tire 5, as the position of the insert 1 after inflating the tire 5 will not be influenced by gravity and the insert 1 will maintain its desired position into the annular space 6 during and/or after curing.

## Claims

1. An inflatable tire (5) comprising an annularly shaped tire body extending along a circumference (20) of the tire (5) around a central rotational axis (18) of the tire (5), at least partially delimiting an annular space (6) surrounding the rotational axis (18) and enclosing an inflatable volume (7) for receiving a condensed state filling material (8), the annular space (6) containing an insert (1) in view of decreasing the inflatable volume (7) so that less inflating material (8) is needed to inflate the tire (5), **characterised in that** the assembly of the insert (1) and the annularly shaped tire body comprises positioning means (4) which permit positioning and at least temporarily fixing the position of the insert (1) into the annular space (6) of the tire (5).

2. An inflatable tire according to claim 1, **characterised in that** the positioning means (4) comprises a protrusion (14, 24) extending from an outer face (2) of the insert (1) facing an inner face (3, 13, 23) of the annularly shaped tire body towards the annularly shaped tire body, the protrusion (14, 24) being provided to contact the inner face (3, 13, 23) of the annularly shaped tire body of the uninflated tire.

3. An inflatable tire (5) according to claim 2, **characterised in that** the positioning means (4) comprises a plurality of protrusions (14.24).

4. An inflatable tire (5) according to claim 3, **characterised in that** the annularly shaped tire body comprises a first (38) and second (39) base portion provided to contact a rim (16) to mount the tire (5) to the rim (16) and **in that** the protrusions (14, 24) are provided to extend from the insert (1) towards respectively the first (38) and the second (39) base portion and contact respectively the first (38) and the second (39) base portion.

5. An inflatable tire (5) according to any one of claims 2 - 4, **characterised in that** the protrusion (14, 24) comprises an extension (15) having a cross-section with smaller dimensions than the dimensions of the cross-section of the protrusion (14, 24) at his end part facing the inner face (3, 13, 23) of the annularly shaped tire body to minimise the contact surface area between the protrusion (14, 24) and the inner face (3, 13, 23) of the annularly shaped tire body of the uninflated tire (5).

6. An inflatable tire (5) according to any one of claims 2 - 5, **characterised in that** the protrusion (14, 24) is positioned on a radial or axial extending outer face (2) of the insert (1) and **in that** it extends in a radial or axial direction respectively.

7. An inflatable tire (5) according to any of claims 2 - 6, **characterised in that** the insert (1) is annularly shaped and **in that** the insert (1) comprises a rounded outer face (2).

8. An inflatable tire (5) according to any one of claims 2 - 7, **characterised in that** the insert (1) is made in one piece.

9. An inflatable tire (5) according to any one of claims 2 - 8, **characterised in that** the insert (1) is made of a material chosen from the group of: deformable, solid and/or foamed plastic material, elastomer, rubber, polypropene, EPDM rubber, polyethylene.

10. An inflatable tire (5) according to any one of claims 2 -9, **characterised in that** the volume of the insert (1) is such that the volume of the annular space (6) is reduced with 20 - 80 %, preferably 30 - 70 %, more preferably 40 - 60 % as compared to the volume of the annular space (6).

11. An insert (1) as defined in any one of claims 2 - 10.

## Patentansprüche

1. Aufblasbarer Reifen (5), umfassend einen ringförmig ausgebildeten Reifenkörper, der sich entlang einem Umfang (20) des Reifens (5) um eine mittige Drehachse (18) des Reifens (5) herum erstreckt, mindestens teilweise einen ringförmigen Raum (6) begrenzt, welcher die Drehachse (18) umgibt, und ein aufblasbares Volumen (7) zum Aufnehmen eines Füllmaterials (8) im kondensierten Zustand umschließt, wobei der ringförmige Raum (6) im Hinblick auf eine Reduzierung des aufblasbaren Volumens (7) einen Einsatz (1) enthält, so dass weniger Füllmaterial (8) erforderlich ist, um den Reifen (5) aufzublasen, **dadurch gekennzeichnet, dass** die Anordnung aus dem Einsatz (1) und dem ringförmig ausgebildeten Reifenkörper Positioniermittel (4) umfasst, welche das Positionieren und mindestens vorübergehende Fixieren der Position des Einsatzes (1) in dem ringförmigen Raum (6) des Reifens (5) ermöglichen.

2. Aufblasbarer Reifen nach Anspruch 1, **dadurch gekennzeichnet, dass** das Positioniermittel (4) einen Vorsprung (14, 24) umfasst, der sich von einer äußeren Fläche (2) des Einsatzes (1), die einer inneren Fläche (3, 13, 23) des ringförmig ausgebildeten Reifenkörpers zugewandt ist, zu dem ringförmig ausgebildeten Reifenkörper hin erstreckt, wobei der Vorsprung (14, 24) derart vorgesehen ist, dass er die innere Fläche (3, 13, 23) des ringförmig ausgebildeten Reifenkörpers des nicht aufgeblasenen Reifens berührt.

3. Aufblasbarer Reifen (5) nach Anspruch 2, **dadurch gekennzeichnet, dass** das Positioniermittel (4) mehrere Vorsprünge (14, 24) umfasst.

4. Aufblasbarer Reifen (5) nach Anspruch 3, **dadurch gekennzeichnet, dass** der ringförmig ausgebildete Reifenkörper einen ersten (38) und einen zweiten (39) Basisabschnitt umfasst, die vorgesehen sind, um eine Felge (16) zu berühren, um den Reifen (5) auf der Felge (16) zu montieren, und dadurch, dass die Vorsprünge (14, 24) vorgesehen sind, um sich von dem Einsatz (1) zu dem ersten (38) bzw. dem zweiten (39) Basisabschnitt zu erstrecken und den ersten (38) bzw. den zweiten (39) Basisabschnitt zu berühren.

5. Aufblasbarer Reifen (5) nach einem beliebigen der Ansprüche 2-4, **dadurch gekennzeichnet, dass** der Vorsprung (14, 24) eine Erweiterung (15) umfasst, welche an deren Endteil, welcher der inneren Fläche (3, 13, 23) des ringförmig ausgebildeten Reifenkörpers zugewandt ist, einen Querschnitt mit kleineren Abmessungen als den Abmessungen des Querschnitts des Vorsprungs (14, 24) aufweist, um den Kontaktoberflächenbereich zwischen dem Vorsprung (14, 24) und der inneren Fläche (3, 13, 23) des ringförmig ausgebildeten Reifenkörpers des nicht aufgeblasenen Reifens (5) zu minimieren.

6. Aufblasbarer Reifen (5) nach einem beliebigen der Ansprüche 2-5, **dadurch gekennzeichnet, dass** der Vorsprung (14, 24) an einer sich radial oder axial erstreckenden Außenfläche (2) des Einsatzes (1) angeordnet ist und dass er sich in einer radialen bzw. axialen Richtung erstreckt.

7. Aufblasbarer Reifen (5) nach einem beliebigen der Ansprüche 2-6, **dadurch gekennzeichnet, dass** der Einsatz (1) ringförmig ausgebildet ist und dass der Einsatz (1) eine gerundete Außenfläche (2) umfasst.

8. Aufblasbarer Reifen (5) nach einem beliebigen der Ansprüche 2-7, **dadurch gekennzeichnet, dass** der Einsatz (1) einstückig ausgeführt ist.

9. Aufblasbarer Reifen (5) nach einem beliebigen der Ansprüche 2-8, **dadurch gekennzeichnet, dass** der Einsatz (1) aus einem Material hergestellt ist, das aus der Gruppe umfassend verformbares, massives und/oder geschäumtes Kunststoffmaterial, Elastomer, Gummi, Polypropen, EPDM-Gummi und Polyethylen ausgewählt wurde.

10. Aufblasbarer Reifen (5) nach einem beliebigen der Ansprüche 2-9, **dadurch gekennzeichnet, dass** das Volumen des Einsatzes (1) derart ist, dass das Volumen des ringförmigen Raums (6) verglichen mit dem Volumen des ringförmigen Raums (6) um 20-80%, vorzugsweise um 30-70% und insbesondere um 40-60% reduziert wird.

11. Einsatz (1) nach einem beliebigen der Ansprüche 2-10.

## Revendications

1. Pneumatique (5) gonflable comprenant un corps de pneumatique de forme annulaire s'étendant le long d'une circonférence (20) du pneumatique (5) autour d'un axe de rotation central (18) du pneumatique (5), délimitant au moins partiellement un espace annulaire (6) entourant l'axe de rotation (18) et enfermant un volume gonflable (7) destiné à recevoir un matériau de remplissage (8) à l'état condensé, l'espace annulaire (6) contenant une pièce rapportée (1) en vue de diminuer le volume gonflable (7) afin que moins de matériau de gonflage (8) soit nécessaire pour gonfler le pneumatique (5), **caractérisé en ce que** l'assemblage de la pièce rapportée (1) et du corps de pneumatique de forme annulaire comprend des moyens de positionnement (4) qui permettent de positionner et de fixer au moins temporairement la position de la pièce rapportée (1) dans l'espace annulaire (8) du pneumatique (5).

2. Pneumatique gonflable selon la revendication 1, **caractérisé en ce que** le moyen de positionnement (4) comprend une protubérance (14, 24) s'étendant d'une face extérieure (2) de la pièce rapportée (1) faisant face à une face intérieure (3, 13, 23) du corps de pneumatique de forme annulaire vers le corps de pneumatique de forme annulaire, la protubérance (14, 24) étant prévue pour entrer en contact avec la face intérieure (3, 13, 23) du corps de pneumatique de forme annulaire du pneumatique non gonflé.

3. Pneumatique (5) gonflable selon la revendication 2, **caractérisé en ce que** le moyen de positionnement (4) comprend une pluralité de protubérances (14, 24)..

4. Pneumatique (5) gonflable selon la revendication 3, **caractérisé en ce que** le corps de pneumatique de forme annulaire comprend une première (38) et une deuxième (39) portion de base prévues pour entrer en contact avec un bord (16) pour monter le pneumatique (5) sur le bord (16) et **en ce que** les protubérances (14, 24) sont prévues pour s'étendre de la pièce rapportée (1) vers respectivement la première (38) et la deuxième (39) portion de base et pour entrer respectivement en contact avec la première (38) et la deuxième (39) portion de base.

5. Pneumatique (5) gonflable selon l'une quelconque des revendications 2 - 4, **caractérisé en ce que** la protubérance (14, 24) comprend une extension (15) ayant une section transversale aux dimensions plus petites que les dimensions de la section transversale de la protubérance (14, 24) à son partie terminale faisant face à la face intérieure (3, 13, 23) du corps de pneumatique de forme annulaire pour réduire à un minimum l'aire de surface de contact entre la protubérance (14, 24) et la face intérieure (3, 13, 23) du corps de pneumatique de forme annulaire du pneumatique (5) non gonflé.

6. Pneumatique (5) gonflable selon l'une quelconque des revendications 2 - 5, **caractérisé en ce que** la protubérance (14, 24) est positionnée sur une face extérieure (2) s'étendant radialement ou axialement de la pièce rapportée (1) et **en ce qu'**elle s'étend respectivement dans une direction radiale ou axiale.

7. Pneumatique (5) gonflable selon l'une quelconque des revendications 2 - 6, **caractérisé en ce que** la pièce rapportée (1) est de forme annulaire et **en ce que** la pièce rapportée (1) comprend une face extérieure (2) arrondie.

8. Pneumatique (5) gonflable selon l'une quelconque des revendications 2 - 7, **caractérisé en ce que** la pièce rapportée (1) est réalisée en une seule pièce.

9. Pneumatique (5) gonflable selon l'une quelconque des revendications 2 - 8, **caractérisé en ce que** la pièce rapportée (1) est réalisée dans un matériau choisi dans le groupe de : matière plastique, élastomère, caoutchouc, polypropylène, caoutchouc EPDM, polyéthylène solide et/ou expansé, déformable.

10. Pneumatique (5) gonflable selon l'une quelconque des revendications 2 - 9, **caractérisé en ce que** le volume de la pièce rapportée (1) est tel que le volume de l'espace annulaire (6) est réduit de 20 - 80 %, de préférence de 30 - 70 %, mieux encore de 40 - 60 % par comparaison avec le volume de l'espace annulaire (6).

11. Pièce rapportée (1) telle que définie dans l'une quelconque des revendications 2 - 10.
